Europäisches Patentamt

(19) European Patent Office

Office européen des brevets

(11) Publication number: **0 041 765**

**A1**

(12) # EUROPEAN PATENT APPLICATION

(21) Application number: **81200642.7**

(22) Date of filing: **10.06.81**

(51) Int. Cl.³: **G 02 B 23/00**
**G 02 F 1/05**

(30) Priority: **11.06.80 US 158641**

(43) Date of publication of application:
**16.12.81 Bulletin 81/50**

(84) Designated Contracting States:
**DE FR GB NL SE**

(71) Applicant: UNION CARBIDE CORPORATION
Law Department - Patent Section 270 Park Avenue
New York, N.Y. 10017(US)

(72) Inventor: Fay, Homer
347 Brantwood Road
Snyder New York(US)

(74) Representative: van der Beek, George Frans et al,
Nederlandsch Octrooibureau Johan de Wittlaan 15 P.O.
Box 29720
NL-2502 LS Den Haag(NL)

(54) **Method and apparatus for detecting optical signals under ambient light conditions.**

(57) Optical signals, such as light beams, are detected under ambient light conditions by observing the impingement of the signal on a target through a gated aperture which is opened at predetermined intervals for periods of predetermined duration while simultaneously exposing the material to periodic pulses of light. The frequency of the light pulse is synchronized with the frequency of the opening of the gated aperture so that the aperture is open for at least a portion of the period during which the light is pulsed. Electro-optic goggles are a preferred type of gated aperture.

EP 0 041 765 A1

Method and apparatus for detecting optical signals under
ambient light conditions.

This invention relates to the visual observation
of optical signals in the presence of high levels of background radiation. More particularly it relates to the visual
detection of the impingement of a beam of light on a target
area in daylight.

Various situations require the observation of a
light beam, either pulsed or constant, under ambient
conditions which may include bright sunlight. For example,
pulsed light beams are widely used to observe in ambient daylight rotating machinery such as fly wheels, turbines and
airplane propellers and the like. For such observation in
the presence of high levels of background illumination such
as bright sunlight the light source used must be very large
and powerful to make the reflected signals visible. Similarly
a very powerful source of an illuminating signal is required
for long-distance target illumination such as lasers for
surveying and military applications. Even when a laser is
used to produce an intense and well directed signal the
visual detectability of the signal depends on the level of
background illumination.

It is an object of the invention therefore to provide
a way to visually detect light signals under ambient daylight
conditions with a less powerful light source than is presently
required. A further object is to provide a portable apparatus
for such detection which can be conveniently carried into the
field. Yet another object is to provide for such detection
at extended distance from the target with reduced power
requirements.

I have now discovered that the objective of the
invention can be achieved by pulsing a source of light
radiation while synchronously gating the transmission of
the radiation being viewed by the eye. The scene is viewed
during the pulse of light radiation. The background radiation,
as from reflected sunlight, is not synchronously modulated and the perceived background radiation is effectively decreased by the attenuation or stopping of transmission to the eye for much of the time when the target material is not being illuminated by the pulsed source of light radiation.

Apparatus according to my invention would consist of three main elements. The first is a source of light radiation which can be pulsed to produce short periods of intense radiation with a low repetition rate and to direct this radiation in a narrow beam toward the target. Suitable sources include lasers and flash lamps. The second element is an aperture or shutter which can be gated on to transmit visible optical rays with good fidelity and gated off to block or attenuate these rays. This can be a mechanical shutter or preferably an electro-optical modulator. The final element includes an electrical power supply and networks and logic circuits to control the synchronization of the gated aperture with the light pulse.

By the combination of a portable source of pulsed light, gated apertures in a face mask or goggles which can be worn for extended periods, portable power supply and portable control unit to synchronize the aperture and pulsed light, there is provided a device which greatly improves the observation of light signals in ambient daylight. The same synergistic combination, with or without the portability feature, makes possible the visual observation of light signal impingement on various materials under ambient light conditions. It is possible also within the scope of the present invention to substitute photographic film for the eyes of the human observer and through the use of a camera or other suitable mechanical arrangement to photographically record the impingement of light signals on a target.

In certain applications of the invention where detection of the source of an optical signal is desired the target on which the signal beam impinges can be the gated aperture itself whereby the beam is observed as projected. For such applications the optical signal source can be a radiation source which inherently generates pulses of light or the like, or it can be a mechanism which modulates ambient light or other steady light to produce pulses of radiation which are then detected through the gated aperture.

The signal element of this invention is a source of visible radiation. This can be any source which can be activated to produce pulses of radiation of sufficient strength to cause the instantaneous radiation to exceed substantially the background radiation when directed at the target of interest. Where portability is desired it is important that the power requirements of the radiation source not exceed the capabilities of a portable power source. To provide a high level of illumination, the radiation should be delivered in short pulses in an optical beam with narrow divergence.

Laser sources are particularly well suited to the requirements of this invention. Several different types of pulsed lasers can be used. Argon or Krypton gas lasers can be pulsed to produce visable signals. Solid-state ruby lasers are well known to produce extremely intense pulses of visably detectable red light. Other solid-state lasers such as Nd : Glass and Nd: YAG produce pulsed infrared signals which can be converted to visible pulses by frequency doubling. There are also many forms of dye lasers that are capable of producing visible signals. In certain cases it may be feasible and desirable to modulate a continuous wave laser, such as the common helium-neon red laser, to produce the light pulses. All these laser types are available commercially and will produce pulses of light in beams with a very narrow beam divergence. While only lasers producing visible radiation have been cited, it would also be possible to use invisible laser radiation in the ultraviolet and infrared spectral regions if additional image converting apparatus were used to render the signals visible to the eye.

Flash lamps are also quite suitable for use in the invention, particularly when the distance is not great and narrow beam divergence is not critical. Xenon-filled flash lamps have been found to be particularly suited for the invention. It should be noted that Xenon-filled lamps can provide light over the entire visible region of the spectrum.

The radiation source, whether laser, flash lamp or other, should preferably deliver the energy in a very short pulse so that the instantaneous level of the stimulation is very high and the reflected signal from the target of interest will have an intensity which instantaneously exceeds substantially the reflected background radiation. The stimulating pulse repetition frequency can be low, less than 20 Hertz, and is preferably below the flicker-fusion frequency to insure a flickering signal, which is preferred.

The gated aperture which attenuates the background radiation can be any device which can be gated "on", that is, actuated to open the aperture, for periods of 100 milliseconds or less with a repetition rate or frequency of 10 Hertz or more. Thus a mechanical shutter of the type used in high speed cameras could be suitable. A preferred type of shutter for the invention is the combination of two polarizer plates of opposite orientation on either side of an electrically birefringent glass, crystal or ceramic material to form a "window" which can be positioned in a viewing port or aperture, or which can be fitted into a face mask or goggles for portability. Such a window normally transmits the usual visual spectrum, but can optionally have a filter to block competing wavelengths and thus render the signal more readily observed.

In such a window, the pair of oppositely oriented or "crossed" polarizer sheets on opposite sides of the electrically birefringent material serves to reduce the visual transmission to a minuscule amount when the material is in the normal or "off" position, with no voltage applied. When an appropriate voltage pulse is applied to the electrically birefringent material a birefringence is induced to make the material function as a wave retardation plate. In so doing it effectively rotates the plane of polarization of the light which has passed through the first polarizer sheet so as to permit the light to pass through the second or normally "crossed" polarizer sheet.

In this "on" or open condition the window transmits up to fifty percent of the incident visual radiation. Transparent ceramics, such as lead lanthanum zirconate titanate (PLZT) are known which exhibit strong electro-optic coupling when a voltage is applied. When combined with polarizer plates that are "crossed", they provide rapid acting optical-transmission modulators which have proven particularly effective in the present invention.

The window is maintained in the "off" position, with very little visual transmission, except during a short time interval $t_1$, during which the transmission of the window is gated "on", thus opening it. This process is repeated with a period $t_2$. The pulse repetition frequency $f_2$ of the "on" state, $f_2 = 1/t_2$, is preferably chosen to be 30 Hertz or higher in order to prevent the eye of the observer from detecting flicker in the ambient illumination or normal viewing light. The relative amount of time the window is "on", referred to as the "duty cycle", is $d=t_1/t_2$. The intensity of the background radiation or ambient light perceived by the observer is equal to the unattenuated intensity times the average transmission, which is approximately the transmission in the "on" state times the duty cycle. Thus it will be seen that the perceived background intensity, or average brightness of the viewed scene, can be greatly attenuated using such an "electro-optic" window by adjusting the time intervals for a short duty cycle.

The firing or pulsing of the radiation source must obviously be coordinated and synchronized with the opening of the shutter of the aperture or viewing port. In normal operation the shutter will be opened a sufficient number of times per second to be above the socalled "flicker-fusion frequency" and thus provide the observer with a relatively normal visual perception of the background radiation signal or illumination, except of course that the radiation or illumination is substantially reduced in intensity. The light source which produces the signal will normally be fired less often than the shutter is opened, the firing being at a frequency which is an integral fraction of the frequency of the shutter opening.

The light source pulses can thus be excited to occur with a repetition rate that is below the flicker-fusion frequency, in order to enhance the conspicuity of the signal striking the target. It is well known that flashing or pulsating lights are more readily perceived than are steady lights, in a background of steady radiation. Furthermore, the apparent brightness of such a pulsating source can be greater than that of a steady source of the same maximum intensity.

In a typical application of the invention the window or shutter of the aperture or viewing port will be opened 48 times per second while the light source will be pulsed during every eighth opening of the shutter with a repetition rate of six pulses per second. While the repetition rate of flashing the light could be as high as the frequency of the shutter opening it is normally less and is an integral fraction of the shutter frequency to insure that the pulsing of the light occurs only when the shutter or window is open. The ratio of the frequency in Hertz of the opening of the shutter or gated aperture to the pulse frequency in Hertz of the light source is from about 30 to 1 to about 3 to 1 for most applications. For observing stroboscopic light on machinery or the like, however, a ratio of about 1 to 1 is preferred. The frequency of opening the window or shutter or other gated aperture is from about 30 Hertz to about 100 Hertz. The frequency of the pulses of light is between about 3 Hertz and about 10 Hertz.

The actual means of coordinating and synchronizing the opening of the gated aperture or shutter with the pulsing of the light source will of course depend upon the type of shutter and the type of light source. In general, electronic controls are preferred for their speed and reliability. Such controls are readily adjusted to varying conditions and can easily be made portable. A suitable control unit comprises an oscillator or functionally similar electronic device which, when supplied from an appropriate power source, will produce rapid primary voltage pulses at an adjustable predetermined repetition frequency. These primary voltage pulses are used to synchronize the operation of the gated aperture or shutter with the operation of the light source.

In a typical embodiment of the invention the primary voltage pulses are modified by electronic circuitry to provide to the aperture secondary voltage pulses of the same repetition frequency but having a pulse width adjustable from a minimum of less than 100 microseconds to a maximum corresponding to the inverse of the repetition frequency of the primary pulses. These secondary voltage pulses, after amplification, are used to drive the gated aperture from the normal "off" or closed state to the "on" or open state, the duration of the "on" state being determined by the pulse width.

The primary voltage pulses are also directed to circuitry which serves to divide the primary pulse repetition frequency by integral amounts to produce tertiary voltage pulses to the light source with a repetition frequency that is an integral submultiple of the repetition frequency of the primary pulses. The tertiary voltage pulses are modified in additional circuitry to produce sub-tertiary voltage pulses which have an adjustable pulse width variable from less than 10 microseconds to greater than 100 microseconds. The leading edges of the secondary voltage pulses and of the sub-tertiary light voltage pulses are synchronous with the leading edges of the primary voltage pulses. The trailing edges of the sub-tertiary voltage pulses to the light source are detected by additional electronic circuitry, with such detection being used to trigger the discharge of power to the stimulating light source. In this manner the occurrence of the light flash may be delayed by a time interval corresponding to the width of the sub-tertiary voltage pulse. This assures that the gated aperture or shutter will have attained the fully open state when the light pulse occurs.

A major utility of the present invention is in remote target sensing as for example in surveying, artillery spotting or other military applications. With present technology if the target is to be illuminated and observed remotely under ambient conditions, a very powerful and well collimated optical signal source such as a laser is required. And under conditions of bright daylight even the laser illuminated target may be difficult to detect with the prevailing background illumination. By viewing the target in the manner of the invention through a gated aperture synchronized with the optical signal source to be open only for short intervals, during which the signals occur, the conspicuity of the target can be greatly enhanced. Such a gated aperture may also permit use of an optical signal source of lower power than would be required without it.

Another use of the invention is in enhancing stroboscopy for the observation of rotating machinery in the laboratory, shop, factory of field. Many applications of stroboscopic illumination are limited by the background radiation which can not be modulated by existing technology. In order, therefore, to observe stroboscopic effects in daylight or under the bright illumination, a very intense pulsed light source is required. By employing a gated aperture according to the invention, however, it is possible to greatly attenuate the ambient background illumination while transmitting the desired stroboscopic signals with only slight attenuation. This permits good visual observation under conditions of background illumination that were previously too bright for satisfactory use of existing stroboscopic light sources. It may also permit the use of less powerful sources of stroboscopic light.

For such applications a portable aperture is desirable. A type suitable for many such uses is an electro-optic goggles with crossed polarizer sheets on either side of a PLZT ceramic eyepiece or window connected through a control circuit to a power source. Such goggles, adapted from welders goggles, can be obtained from the Opto-Ceramic division of Motorola, Inc., Albuquerque, New Mexico.

The description of the invention has been with reference to an optical signal or light source which is normally visible to the human eye, it can also be used with optical signals or light sources which are visible only when a special image conversion apparatus is used. The image converter can be attached to or made a part of the viewing port or goggles. An example of such a light source is an infrared bulb.

While the invention has been described with respect to visual detection, a photographic camera or other image detecting device may be substituted for the human eye, when it is desired to record the projected image of the optical signal or light source. The gated aperture or shutter of the camera is gated open for one or more predetermined intervals, during which the light pulses are synchronized to occur. By controlling the number of intervals and pulses, the exposure of the recording medium to the light pulses may be adjusted while the relative exposure of the medium to background radiation is attenuated. With properly selected film a camera or the like can also be used to record optical signals not visible to the human eye.

CLAIMS

1. Method of improving visual detection under ambient light conditions of an optical signal, which method comprises observing said signal through a gated aperture which is open at predetermined intervals for periods of predetermined duration while simultaneously projecting said signal in periodic pulses, the frequency of said pulses being synchronized with the frequency of the opening of said gated aperture, whereby said pulses are observed when said aperture is open.

2. Method according to claim 1 wherein said ambient light is daylight.

3. Method according to claim 1 wherein said optical signal is the impingement of a beam of light on a surface.

4. Method according to claim 1 wherein said optical signal is the impingement of a laser beam on a surface.

5. Method according to claim 3 or 4 wherein the surface on which said beam impinges is said gated aperture, whereby said beam is observed as projected.

6. Method according to claim 1, 2, 3, or 4 wherein said gated aperture is open at predetermined uniform intervals.

7. Method according to claim 1, 2, 3, or 4 wherein said gated aperture is open for periods of predetermined uniform duration.

8. Method according to claims 1, 2, 3 or 4 wherein the duration of an individual opening of said gated aperture is coincident with at least a major portion of an individual pulse of said signal.

9. Method according to claim 1, 2, 3 or 4 wherein the pulse frequency of said signal pulses is less than the frequency of opening said gated aperture.

10. Method according to claim 1, 2, 3 or 4 wherein the ratio of the frequency in Hz of the opening of the gated aperture to the pulse frequency in Hz of the signal pulses is from about 30 to 1 to about 1 to 1.

11. Method according to claim 1, 2, 3 or 4 wherein the ratio of the frequency in Hz of the opening of the gated aperture to the pulse frequency in Hz of the signal pulses is from about 30 to 1 to about 3 to 1.

12. Method according to claim 1, 2, 3 or 4 wherein the ratio of the frequency in Hz of the opening of the gated aperture to the pulse frequency in Hz of the signal pulses is about 1 to 1.

13. Method according to claim 1,2, 3 or 4 wherein the frequency of the opening of said gated aperture is above the prevailing flicker-fusion frequency.

14. Method according to claim 1, 2, 3 or 4 wherein the pulse frequency of said signal is equal to or below the flicker-fusion frequency.

15. Method according to claim 1, 2, 3 or 4 wherein the frequency of opening said gated aperture is between about 30 Hz and about 100 Hz.

16. Method according to claim 1, 2, 3 or 4 wherein the frequency of said signal pulses is between about 3 Hz and about 10 Hz.

17. Method according to claim 1, 2, 3 or 4 wherein the duration of an individual opening of said aperture is adjusted to provide the desired degree of attenuation of the ambient light prevailing when said method is practiced.

18. Device for the visual detection under ambient light conditions of an optical signal such as the impingement of a projected light beam on a surface which comprises

a pulsed source of optical signals capable of pulsing at a predetermined rate,

a normally closed gated viewing aperture capable of being opened at predetermined intervals for periods of predetermined duration, and

control means capable of synchronizing the frequency of said signal pulses with the frequency of the opening of said gated aperture.

19. Device according to claim 18 wherein said pulsed signal source is a laser.

20. Device according to claim 18 wherein said pulsed signal source is a flash lamp.

21. Device according to claim 18 wherein said pulsed signal source is a Xenon-filled flash lamp.

22. Device according to claim 18 wherein said gated viewing aperture embodies a mechanical shutter.

23. Device according to claim 18 wherein said gated viewing aperture embodies an electro-optic material.

24. Device according to claim 18 wherein said electro-optic material is lead lanthanum zirconate titanate.

| Category | Citation of document with indication, where appropriate, of relevant passages | Relevant to claim |
|---|---|---|
| | **DOCUMENTS CONSIDERED TO BE RELEVANT** | |
| X | GB - A - 996 634 (P.E. COELHO)<br>* Pages 2,3; figures 1,2 * | 1-3,6-8,18,22 |
| X | FR - A - 1 102 577 (J. AMIOT)<br>* Whole document * | 1,2,6,7,12,13,17,18,20,22,23 |
| | FR - A - 2 391 484 (THOMSON-CSF)<br>* Pages 2-7; figures 1,8 * | 1-3,6-8,18,20,23,24 |
| | DE - B - 1 291 519 (GENERAL ELEC-TRIC COMPANY)<br>* Whole document * | 1,4,6,7,18,19 |
| X | US - A - 3 294 002 (A. VITKINE)<br>* Columns 3,5,6; figures 1,4 * | 1,3,5,7,9,12,18,20-22 |

**CLASSIFICATION OF THE APPLICATION (Int. Cl.³)**

G 02 B 23/00
G 02 F 1/05

**TECHNICAL FIELDS SEARCHED (Int. Cl.³)**

G 02 B 23/00
G 02 F 1/05
G 01 S 17/10

**CATEGORY OF CITED DOCUMENTS**

X: particularly relevant
A: technological background
O: non-written disclosure
P: intermediate document
T: theory or principle underlying the invention
E: conflicting application
D: document cited in the application
L: citation for other reasons

&: member of the same patent family.
corresponding document

The present search report has been drawn up for all claims

| Place of search | Date of completion of the search | Examiner |
|---|---|---|
| The Hague | 20-08-1981 | BOEHM |

EPO Form 1503.1 06.78